# EUROPEAN PATENT APPLICATION

(11) **EP 4 151 610 A1**
(43) Date of publication of application: **22.03.2023**
(21) Application number: 22020445.7
(22) Date of filing: 15.09.2022
(51) Int. Cl.: C04B 28/02, C04B 28/04, C04B 28/10, C04B 28/14

(54) **MIXTURE FOR THE PRODUCTION OF AUTOCLAVED AERATED CONCRETE**

(30) Priority: 18.09.2021 PL 43897621
(71) Applicant: Akademia Gorniczo-Hutnicza im. Stanislawa Staszica w Krakowie, 30-059 Krakow (PL)
(72) Inventor: Golek, Lukasz, 30-128 Krakow (PL); Maciazek, Marek, 03-531 Warszawa (PL); Kapeluszna, Ewa, 39-400 Tarnobrzeg (PL); Szudek, Wojciech, 33-300 Nowy Sacz (PL)
(74) Representative: Belz, Anna

(57) **Abstract**

A mixture for the production of autoclaved aerated concrete, containing a binder with a specific surface area greater than 2500 cm²/g according to Blaine and possibly a microaggregate with a specific surface area of 1500 - 2500 cm²/g according to Blaine, as well as water and preferably additives such as blowing agents and surfactants, the binder comprising a silica source in the form of a component or mixture of components selected from the group consisting of quartz sand, fossil fuel fly ash, blast furnace slag, and the binder also comprising a calcium source in the form of a component or mixture of components selected from the group consisting of lime, fossil fuel fly ash, blast furnace slag, cement and gypsum, and the molar ratio of the amount of calcium source to the amount of silica source in the mixture is 0.25 - 0.95, characterized in that the mixture contains 10-90% by weight of raw material with glass phase content over 90% by weight, over 10% by weight of alkali in the form of Na₂O and K₂O oxides and over 60% by weight of SiO₂. The latter raw material is preferably glass cullet.

## Description

The subject of the invention is a mixture for the production of autoclaved aerated concrete with improved mechanical properties.

Autoclaved aerated concrete (AAC) is a construction and insulation material usually produced in the form of blocks, commonly used to make reinforced and unreinforced walls, especially in single-family housing. Its characteristic feature is a very low thermal conductivity coefficient (in the range of 0.08-0.19 W/m·K). The industrially produced ACC obtains its properties in the process of hydrothermal treatment, in autoclaves at the temperature of 180-200°C and under the saturated steam pressure reaching 1.1-1.3 MPa. Such material has a low bulk density (from 300 to 1000 kg/m³), which is regulated by porosity resulting from the presence of a large number of closed pores filled with air. Due to all of the reactions taking place during the production of autoclaved aerated concrete, the raw materials used for production mainly consist of calcium oxide CaO (calcium source) and silicon dioxide SiO₂ (silica source). The traditional raw material input for AAC production includes a binder, most often containing cement, lime and gypsum, and aggregate, which is usually sand, fly ash, blast furnace slag, and other siliceous raw materials. In addition, the feedstock contains a blowing agent, usually in the form of aluminum powder or aluminum paste, water and additional ingredients that improve the rheological properties of the mass. The technologies for the production of aerated concrete differ from each other in terms of the raw materials used, as well as their preparation for the production process. The AAC components, i.e. binder, aggregate, aluminum powder (in an aqueous solution with detergent) and water are mixed and then poured into a mold in which, as a result of the reaction of metallic aluminum with calcium hydroxide and water, hydrogen gas is released and the mass grows, followed by her hardening. The pre-hardened mass is cut into blocks and subjected to a process of hydrothermal treatment, the so-called autoclaving for several hours, usually 8 h, usually at a temperature of 180-200°C and in a saturated water vapor atmosphere at a pressure of 1.1-1.3 MPa, thanks to which the material obtains its final mechanical strength.

There is known from the patent description PL164323 B1 a binder for the production of aerated concrete containing by weight: 40-60% fly ash, 15-40% ground burnt lime, 5-25% converter slag and 5-12% gypsum stone. The minimum specific surface area of the raw materials is 400 cm²/g according to Blaine.

The invention disclosed in the patent application PL304202 A1 relates to aerated concrete consisting of 15-20% by weight of burnt lime, 70-75% of coal fly ashes and 5-15% of secondary raw material formed during gas desulphurization using the dual-scaled method.

The patent description PL207649 B1 discloses a mixture for the production of aerated concrete consisting of lime and/or cement, sulfate raw material and fly ash as well as a surfactant, raising agent and optionally additives improving the rheological properties of the concrete mixing mass. Fly ash used is fluidized bed ash in an amount of 10 to 100% of the total amount of traditional silica ashes, or a mixture of silica fly ashes and fluidized bed ashes, with a content of 50-70% of the glass phase, preferably in a ratio of 1: 4.

The patent application PL351969 A1 discloses a method of producing autoclave-hardened aerated concrete, where binding raw materials and aggregates, blowing agents and sludge and/or water are used, which are mixed with each other and are foamed under pressure during the concentration time and before the hydrothermal process. The method is characterized by the fact that when the cement is replaced by quicklime and/or hydrated lime and/or gypsum by 5 to 50%, hydraulically ground flour of metallurgical slag with a specific surface of 1500 - 7000 cm²/g, according to Blaine, with a proportion of 1-30 % by weight is mixed together with other components such as sand sludge and/or recirculated aerated concrete sludge and/or water, and before mixing with the blowing agent. In the alkaline environment formed by the binder hydration products at pH values = 13-14, the CaO and SiO₂ rich amorphous phases contained in the slag begin to dissolve to form the C-S-H phase (I, II). The resulting mass is cut in a known manner as a form block and steam hardened in autoclaves.

The patent application CN103011886 A describes autoclaved aerated concrete obtained after mixing with water, in the following weight ratios: 70-80 parts by weight of conventional fly ash, 10-15 parts by weight of lime, 8-12 parts by weight of cement, 5.5-6.5 parts by weight of gypsum, 4-6.5 parts by weight of aluminum powder and 64-70 parts by weight of water.

Patent description CN103387412 B relates to a method for the production of aerated concrete, in which the mixture obtained by weight: 35-65% by weight of ash from flue gas desulphurization, 5-15% by weight of Portland cement, 10-20% by weight of quick lime and 10-40% by weight slag from waste incineration plants.

A raw material mixture for the production of autoclaved lime-sand-ash products is also known from the patent description PL217874 B1, consisting by weight of: 20.5-61.5% quartz sand, 5.5-8.0% burnt lime and 20.5 -61.5% of ground bottom ashes constituting waste from the combustion of solid fuels, preferably hard coal, in fluidized bed boilers.

Technologies for the production of autoclaved aerated concrete (AAC) are known and used, such as, for example, UNIPOL (universal Polish technology), PGS ("pianogazosilikat"), or SW (slow-setting silicate), which are described in the publication by Z. Giergiczny (ed.) Entitled Vademecum Technologa Betonu, Górażdże Cement S.A., 2017, available on the Internet at https://www.gorazdze.pl/pl/node/9722. In Poland, the UNIPOL technology is most often used, the characteristic feature of which is the activation of a part of the aggregate with an initial specific surface area of 1500-2500 cm²/g according to Blaine, by grinding it together with a binder to a large specific surface area, above 2500 cm²/g according to Blaine, which allows to significantly accelerate the reaction of silica with the binder due to its faster dissolution. A typical composition of the binder for AAC production in the UNIPOL technology is presented, among others, in the publication of H. Jatymowicz, J. Siejko, G. Zapotoczna-Sytek entitled: "Technology of autoclaved aerated concrete", Arkady, Warsaw 1980, contains in the "sand variant" 38.5 wt.% of quartz sand, 34.5 wt.% of lime and 27 wt.% cement, and in the "ash variant" 40 wt.% fly ash, 32 wt.% lime, 18 wt.% cement, and 10 wt.% gypsum. Mixture for 1 m³ of concrete with this binder contains: sand sludge - 350 dm³, binder - 260 kg, water - 75 dm³, aluminum powder - 410 g, surfactant -1 dm³.

As is known from industrial practice and described, inter alia, in the publication of G. Zapotoczna-Sytek entitled "Autoclaved aerated concrete", Wydawnictwo Naukowe PWN, 2013, the quantitative composition of the mixture for AAC production and the parameters of the autoclaving process are designed in such a way that the final product of the hydrothermal reaction is crystalline tobermorite, the presence of which is considered necessary to provide sufficiently high compressive strength of the finished product.

It has been observed that the formation of tobermorite crystals and their growth during the production of AAC from a traditional blend, is accompanied by an increase in the microporosity of the AAC matrix, already containing pores associated with the use of the blowing agent during its production. This additional microporosity is the site of stress concentration and consequently limits the compressive strength of the finished product.

The present invention solves this technical problem by developing a mixture for the production of autoclaved aerated concrete, the main product of the hydrothermal reaction of which is not crystalline tobermorite, but amorphous C-S-H phase, but at the same time the compressive strength is at least compliant with the PN-EN 771-4:2012 standard. "Requirements for masonry components - Part 4: Autoclaved aerated concrete masonry components".

The essence of the mixture for the production of autoclaved aerated concrete, containing a binder with a specific surface area greater than 2500 cm²/g according to Blaine and possibly a microaggregate with a specific surface area of 1500 - 2500 cm²/g according to Blaine, as well as water and preferably additives such as blowing agents and surfactants, the binder comprising a silica source in the form of a component or mixture of components selected from the group consisting of quartz sand, fly ash from fossil fuel, blast furnace slag, and the binder also comprising a calcium source in the form of a component or mixture of components selected from the group consisting of lime, fly ash from fossil fuel combustion, blast furnace slag, cement and gypsum, and the molar ratio of the amount of calcium source to the amount of silica source in the mixture is 0.25-0.95, according to the invention characterized in that the blend contains 10-90% by weight of the raw material with a glass phase content of more than 90% by weight, more than 10% by weight of alkali in the form of Na₂O and K₂O oxides, and more than 60% by weight of SiO₂.

Preferably, glass cullet is used as the raw material with a glass phase content above 90% by weight.

The mixture for the production of autoclaved aerated concrete, according to the invention, although it does not form crystalline tobermorite or forms its reduced amount, previously considered the phase necessary to give the finished product adequate strength, allows to obtain AAC with increased strength in relation to the strength indicated in the applicable standards for aerated concrete. Increasing the strength parameters is a consequence of reducing the porosity of the slurry and increasing the packing degree of its microstructure, and it results from the increased reactivity of silica in the glass phase, compared to silica in the crystalline phase. The introduction of the raw material containing more than 90% by weight of the glass phase and at least 10% by weight of alkali (in particular Na⁺ ions), e.g. glass cullet, in a system hydrating under autoclaving conditions, blocks the loss of strength of the finished product by partial or complete inhibition of tobermorite crystallization. After completion of the hydrothermal treatment, the basic product forming the AAC matrix is the amorphous or semi-crystalline C-S-H phase. Such a matrix is characterized by a higher degree of packing than in the case of a traditional mixture, leading to the formation of large amounts of tobermorite. The partial or complete stopping of the tobermorite crystallization simultaneously reduces or completely blocks the formation of additional matrix porosity resulting from the growth of crystals, which results in obtaining increased strength of the finished product.

Additionally, thanks to the introduction of active silica in the glassy phase, which dissolves faster than traditionally used quartz sands, energy consumption is reduced. This allows you to shorten the time or lower the temperature of the autoclaving process.

An additional advantage is the possibility of introducing waste materials into the mixture, often lying in landfills, and at the same time reducing the consumption of natural resources, mainly quartz sand, and binders such as lime and cement, the production of which is associated with the emission of significant amounts of CO₂ to the atmosphere.

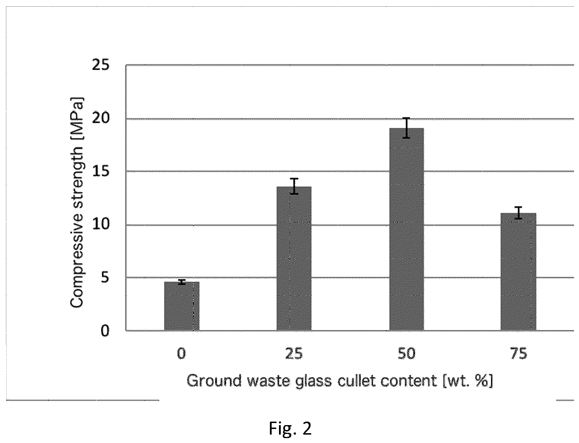

The invention is explained below in practical embodiments and in the drawings, where Fig. 1 shows the XRD pattern of the glass cullet used in AAC mixtures, and Fig. 2 shows the compressive strength diagram of the autoclaved slurries described in Example 2.

### Example 1

A cubic autoclaved aerated concrete sample was prepared with the following binder components (based on dry weight):
- 5% by weight of CEM I 42.5R type Portland cement,
- 25% by weight of a bottle glass cullet, washed and ground in a ball mill to a specific surface area of 4000 cm²/g according to Blaine,
- 70 wt.% Lignite combustion fly ash ground to a specific surface area of 3400 cm2 / g according to Blaine.

Table 1 shows the composition of the most important oxides in the above-mentioned dry components of the mixture for the production of AAC.

**Table 1**

| Chemical composition | [% by weight] | | |
|---|---|---|---|
| | CEM I 42,5R Cement | Glass cullet | Lignite fly ash |
| SiO₂ | 21.20 | 73.20 | 26.20 |
| Al2O₃ | 4.32 | 1.50 | 4.66 |
| Fe₂O₃ | 3.26 | - | - |
| CaO | 63.63 | 11.80 | 37.70 |
| MgO | 1.23 | 0.20 | 5.34 |
| SO₃ | 3.14 | - | 13.48 |
| K₂O | 0.55 | 0.30 | 1.23 |
| Na₂O | 0.26 | 13.00 | 0.89 |
| Cl | 0.09 | - | - |

The glass cullet, as shown by the XRD analysis, contained 100% of glass phase, which is confirmed by the graph presented in Fig. 1 (no reflections originating from crystalline phases in the diffraction pattern).

The molar ratio of the amount of calcium source to the amount of silica source in the blend was 0.92.

Based on 1 m³ of the finished product, the composition of the mixture for the production of AAC was as follows: 600 kg/m³ of dry ingredients (cement, fly ash, glass cullet in the above-mentioned amounts), 300 dm³ of water, 350 g of aluminum powder as a blowing agent, 1 dm³ of surfactant in the form of a commercially available detergent. All ingredients were mixed for 30 seconds with a 1050 rpm mixer equipped with an agitator, then the mixture was poured into a 100 x 100 x 100 mm mold and allowed to rise. After the mixture had risen, the excess material was cut to the height of the mold, then placed in a steam curing chamber at a temperature of 60°C and subjected to initial hydration for 6 hours. The sample was then demolded and placed in a laboratory autoclave. Autoclaving was carried out for 8 hours at the temperature of 180°C.

The finished AAC cube was subjected to a compressive strength test. The density of the sample was about 800 kg/m³. The obtained strength was 6.32 MPa, higher than the minimum strength class for concrete with the 800 density class indicated in the PN-EN 771-4: 2012 standard, i.e. 5 MPa. This confirms that the AAC sample obtained with the use of 25% by weight of cullet meets the assumed requirements.

### Example 2

Prisms of autoclaved slurries were prepared from the following components of the AAC mix (in terms of dry matter):
binder, including:
   - CEM I 42.5R type Portland cement in the amount of 5% by weight
   - bottle glass cullet, washed and ground in a ball mill to a specific surface area of 4000 cm²/g according to Blaine, in the following quantities:
      A. 25% by weight
      B. 50% by weight
      C. 75% by weight
and microaggregate in the form of:
   - fluidized bed combustion fly ash with a specific surface area of 2400 cm²/g, according to Blaine, in the following amounts:
      A. 70% by weight
      B. 45% by weight
      C. 20% by weight.

Additionally, a reference slurry (D) was prepared containing 5 wt.% Portland cement and 95 wt.% fluidized bed combustion fly ash, but no glass cullet.

The glass cullet, as shown by the XRD analysis, contained 100% of glass phase, which is confirmed by the graph presented in Fig. 1 (no reflections originating from crystalline phases in the diffraction pattern).

The composition of the slurries is presented in Table 2.

**Table 2**

| | | | | |
|---|---|---|---|---|
| Dry mass component | Component content in dry mass [% by weight] | | | |
| | Sample A | Sample B | Sample C | Sample D |
| CEM I 42.5R Cement | 5 | 5 | 5 | 5 |
| Ground glass cullet | 25 | 50 | 75 | 0 |
| Fluidized bed combustion fly ash | 70 | 45 | 20 | 95 |

Table 3 shows the composition of the most important oxides in the above-mentioned dry components of the mixture for the production of AAC.

**Table 3**

| Chemical composition | [% by weight] | | |
|---|---|---|---|
| | CEM I 42.5R Cement | Glass cullet | Fluidized bed combustion fly ash |
| SiO₂ | 21.20 | 73.20 | 38.29 |
| Al2O₃ | 4.32 | 1.50 | 26.09 |
| Fe₂O₃ | 3.26 | - | - |
| CaO | 63.63 | 11.80 | 15.41 |
| MgO | 1.23 | 0.20 | 1.47 |
| SO₃ | 3.14 | - | 6.68 |
| K₂O | 0.55 | 0.30 | 1.62 |
| Na₂O | 0.26 | 13.00 | 1.14 |
| Cl | 0.09 | - | - |

The dry masses were mixed with water at the w/s ratio = 0.5.

Prisms with the dimensions of 40x40x160 mm were formed from the slurries and cured in the molds in ambient conditions for 24 hours. Then the samples were demolded and subjected to autoclaving at 180°C for 12 hours. The compressive strength of the samples after the completion of the hydrothermal treatment is shown in the diagram (Fig. 2). The obtained compressive strength values obtained for samples A, B and C containing ground glass cullet were at least two times higher than for the reference sample D, without this component.

## Claims

1. Mixture for the production of autoclaved aerated concrete, containing a binder with a specific surface area greater than 2500 cm²/g according to Blaine and possibly a microaggregate with a specific surface area of 1500 - 2500 cm²/g according to Blaine, as well as water and preferably additives such as blowing agents and surfactants, the binder comprising a silica source in the form of a component or mixture of components selected from the group consisting of quartz sand, fossil fuel fly ash, blast furnace slag, and the binder also comprising a calcium source in the form of a component or mixture of components selected from the group consisting of lime, fossil fuel fly ash, blast furnace slag, cement and gypsum, and the molar ratio of the amount of calcium source to the amount of silica source in the mixture is 0.25 - 0.95, **characterized in that** the mixture contains 10-90% by weight of raw material with glass phase content over 90% by weight, over 10% by weight of alkali in the form of Na₂O and K₂O oxides and over 60% by weight of SiO₂.

2. A mixture according to claim 1, **characterized in that** glass cullet is used as the raw material with a glass phase content above 90% by weight.
